# EUROPÄISCHE PATENTSCHRIFT

(11) **EP 2 841 648 B1**
(45) Veröffentlichungstag und Bekanntmachung des Hinweises auf die Patenterteilung: **22.08.2018**
(21) Anmeldenummer: 13717752.3
(22) Anmeldetag: 11.04.2013
(51) Int. Cl.: B32B 37/14, B32B 38/08, D21G 1/02

(54) **VERWENDUNG EINER WALZE IN EINEM KALANDER**
USE OF A ROLL IN A CALENDER
UTILISATION D'UN ROULEAU DANS UNE CALANDRE

(30) Priorität: 27.04.2012 DE 102012207095
(43) Veröffentlichungstag der Anmeldung: 04.03.2015
(73) Patentinhaber: Voith Patent GmbH, 89522 Heidenheim (DE)
(72) Erfinder: BISCHOF, Hubert, A-8680 Mürzzuschlag (AT); BREINEDER, Martin, A-2620 Natschbach (AT); GROHMANN, Franz, A-2671 Payerbach (AT)
(86) Internationale Anmeldenummer: PCT/EP2013/057572
(87) Internationale Veröffentlichungsnummer: WO 2013/160117

(56) Entgegenhaltungen:
- EP-A1- 0 511 951
- EP-A1- 1 612 329
- DE-C1- 3 533 045
- GB-A- 2 057 092

## Beschreibung

Die Erfindung betrifft die Verwendung einer Walze in einem Glättwerk oder Kalander einer Maschine zur Herstellung und/oder Veredelung einer Faserstoffbahn wie beispielsweise einer Papier- oder Kartonbahn.

Die Verwendung von faserverstärkten und gefüllten Epoxydharzen für Walzenbezüge in Kalandern und andere abriebsbeständige Walzenbezüge zur Anwendung in der Papierindustrie und ähnlichen Anwendungen ist Stand der Technik.

Beispielsweise ist aus der DE 102004025116 A ein Faserverbund-Walzenbezug für den Einsatz in Flächenmaterial verarbeitenden Maschinen bekannt, wobei das Material des Walzenbezugs eine Faserkomponente und eine Matrixkomponente aufweist und wobei sich die Materialzusammensetzung aus Faserkomponente und Matrixkomponente zumindest abschnittweise kontinuierlich ändert.

Weiterhin geht aus der WO 08/116832 A eine Walze insbesondere für einen Kalander hervor, welche einen Walzenkörper aus einem metallischen Material und auf diesem einen elastischen Walzenbezug aufweist, welcher zumindest drei Lagen umfasst, die eine Polymermatrix und Faserverstärkungen aufweisen. Eine der Lagen umfasst dabei zu mindestens 25% Kohlefaser.

GB 2 057 092 A offenbart eine Walze mit einem Walzenbezug aus Harzmaterial mit darin eingebettetem Fasermaterial. Aus der DE 35 33 045 C1 ist ein Verfahren zur Herstellung einer nachgiebigen Walze bekannt, bei der ein Streifen in Matrixmaterial getaucht und auf einen Walzenkern in nebeneinanderliegenden Windungen wendelförmig aufgewickelt wird. Dabei werden die Windungen in axialer Richtung verpresst.

Die bekannten Walzenbezüge enthalten gewöhnlich einen gewissen Anteil an Füllstoffen, welche die technischen Eigenschaften der Bezüge und hier insbesondere den Druckmodul und die Abriebsbeständigkeit bestimmen. Um die gewünschten Eigenschaften zu erzielen, sind Füllgrade von bis zu 30 Volumen-% nicht selten. Die Füllung mit Füllstoffpartikeln kann jedoch in vielen hochbelasteten Positionen nicht die gewünschte mechanische und/oder thermische Beständigkeit der Walzenbezüge in Bezug auf die Reduktion der thermischen Ausdehnung, des mechanischen Dehnungsverhaltens und der Festigkeit garantieren.

Daher ist es Aufgabe der Erfindung, Maßnahmen anzugeben, die eine Verbesserung der letztgenannten Eigenschaften ermöglichen.

Die Aufgabe wird durch die Verwendung einer Walze in einem Kalander nach Anspruch 1 gelöst.

Erfindungsgemäß ist dabei vorgesehen, durch Verwendung geeigneter Fasern, welche ein Längengewicht von 0,5 bis 5 dtex, bevorzugt von 0,5 bis 2 dtex aufweisen, einen Walzenbezug zu schaffen, welcher thermisch und/oder mechanisch hoch belastbar ist.

Weitere vorteilhafte Ausführungsformen und Aspekte der Erfindung gehen aus den abhängigen Ansprüchen hervor.

Vorteilhafterweise kann der Fasergehalt im Walzenbezug 15 bis 25 Gewichts-% betragen.

Gemäß einem vorteilhaften Aspekt der Erfindung kann das zumindest eine Fasermaterial ein Blend aus Fasern verschiedener Länge und/oder verschiedenen Längengewichts und/oder verschiedener Materialien sein.

Bevorzugt kann das zumindest eine Fasermaterial ein Blend aus Fasern verschiedener Aramidtypen oder ein Blend aus Mischungen von Aramid mit Polyester, Polyacrylnitril oder Viskose sein.

Vorteilhafterweise kann das zumindest eine Fasermaterial in Form eines Wirrfaservlieses vorliegen.

Der Walzenbezug kann zumindest einen Füllstoff enthalten, welcher ausgewählt ist aus: Oxide, Carbide, Nitrate, (Aluminium)Silikate, Sulfate, Karbonate, Phosphate, Titanate, Carbonanotubes, Carbonanofibres, Glassspheren, Metalle mit oder ohne Oberflächenmodifikation) mineralischen oder synthetischen Ursprungs.

Ein Verfahren zur Herstellung einer derartig ausgebildeten Walze, das jedoch von den Ansprüchen nicht umfasst ist, kann die folgenden Schritte umfassen: Vorbereiten eines Walzenkörpers, Bereitstellen eines bandartigen Fasermaterials und eines Harzmaterials, Aufwickeln des bandartigen Fasermaterials auf den rotierenden Walzenkörper mittels einer kontrollierten Zugspannung und/oder unter definierter Dehnung des Fasermaterials, Tränken des bandartigen Fasermaterials mit Harzmaterial und Aushärten des Walzenbezuges.

Gemäß einem vorteilhaften Aspekt der Erfindung kann der Schritt des Tränkens des bandartigen Fasermaterials mit Harzmaterial vor und/oder während und/oder nach dem Aufwickeln des bandartigen Fasermaterials auf den Walzenkörper erfolgen. Das Aufwickeln des bandartigen Fasermaterials erfolgt in mehreren Hüben über mehrere Lagen oder in einem Hub über eine Lage mit einander überlappenden Wicklungen. Die Erfindung wird nachfolgend unter Bezugnahme auf die Figuren detaillierter beschrieben. In den Figuren zeigen:
Fig. 1 eine stark schematisierte Schnittdarstellung eines erfindungsgemäß ausgestalteten Walzenbezuges gemäß einem ersten Ausführungsbeispiel, und
Fig. 2 eine stark schematisierte Schnittdarstellung eines erfindungsgemäß ausgestalteten Walzenbezuges gemäß einem zweiten Ausführungsbeispiel.

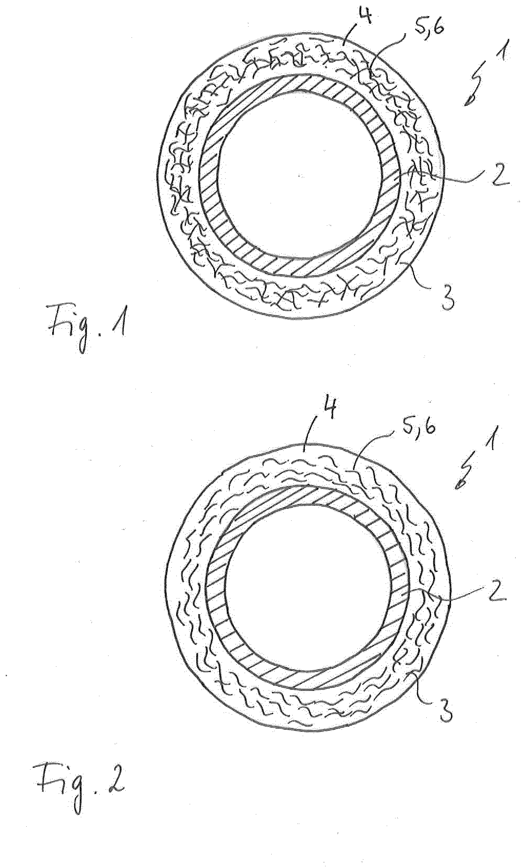

In den Fig. 1 und 2 sind zur Verdeutlichung der erfindungsgemäßen Maßnahmen in stark schematisierter geschnittener Darstellung zwei Ausführungsbeispiele für Walzen 1 dargestellt, welche für die Verwendung in einem Kalander zur Veredelung einer Faserstoffbahn wie z.B. einer Papier- oder Kartonbahn geeignet sind.

Derartige Walzen 1 müssen sowohl hohen Linienlasten als auch hohen Temperaturen standhalten können. In gängigen Kalanderbauformen, welche online direkt in einer Papiermaschine oder auch offline als eigenständiges Aggregat betrieben werden können, können eine oder mehrere elastische Walzen 1 jeweils mit zumindest einer nicht weiter dargestellten harten Walze einen Nip bilden, in welchem die durchlaufende Faserstoffbahn geglättet und satiniert wird.

Die Walzen 1 weisen dabei gewöhnlich einen harten Walzenkern 2 auf, welcher vorzugsweise aus einem metallischen Material wie Stahl gefertigt ist. Alternativ hierzu sind inzwischen auch Walzenkerne 2 aus faserverstärkten Kunststoffen bekannt.

Auf dem Walzenkern 2 ist ein Walzenbezug 3 ausgebildet, welcher in den beschriebenen Ausführungsbeispielen aus einem Harzmaterial 4 gebildet ist, welches gewöhnlich eine Kombination aus einem oder mehreren Harzkomponenten sowie einem Härter und ggf. weiteren Additiven und Zusatzstoffen umfasst. Als Harzkomponenten bieten sich hierbei eine Vielzahl von aminisch oder anhydridisch vernetzten, aber auch selbstvernetzenden Epoxyharzen, Isocyanatestern oder anderen Duroplasten an.

Üblicherweise werden Füllstoffkomponenten eingesetzt, die im Harzmaterial 4 enthalten sind und/oder in das Fasermaterial 5 eingebracht und/oder während des Wickelprozesses auf das bereits mit Harzmaterial 4 getränkte Fasermaterial 5 und/oder auf eine Oberfläche der rotierenden Walze 1 aufgebracht werden. Als Füllstoffe kommen Hartstoffe wie Oxide, Carbide, Nitrate, (Aluminium)Silikate mineralischen oder synthetischen Ursprungs oder Glasspheren und/oder nanoskalige Füllstoffe wie die bereits vorstehend erwähnten, aber auch Sulfate, Karbonate, Phosphate, Titanate, Carbonanotubes, Carbonanofibres oder Metalle mit oder ohne Oberflächenmodifikation in Frage.

Die bekannten Walzenbezüge 2 weisen weiterhin, wie oben bereits angesprochen, gewöhnlich eine Armierung oder Verstärkung aus einem oder mehreren Faserkomponenten auf. In den Figuren 1 und 2 ist das Fasermaterial 5 stark schematisiert in Form von einzelnen Faserstücken 6 dargestellt, um die erfindungsgemäßen Maßnahmen besser verdeutlichen zu können.

Aufgrund ihrer hohen Festigkeiten kommen primär Aramidfasern, aber auch Polyester, Polyacrylnitril oder Viskose zur Anwendung, die beispielsweise in Form von bandartigen Wirrfaservliesen in einem Wickelprozess auf die Walze 1 aufgebracht und dabei und/oder davor und/oder danach mit dem Harzmaterial 4 oder einer Vorstufe davon getränkt, die nach Aushärtung mit oder ohne Zugabe von weiteren Komponenten einen Verbundwerkstoff ergibt. Auf das Wickelverfahren wird weiter unten noch gesondert eingegangen.

Der Anteil des Fasermaterials 5 an dem gesamten Verbundwerkstoff sowie die durchschnittliche Ausrichtung einzelner Faserstücke 6 in die verschieden Ausrichtungen beeinflussen in sehr hohem Ausmaß die Eigenschaften des fertigen Verbundes wie z.B. Festigkeiten und thermische Ausdehnung.

Um in alle Raumrichtungen des Walzenbezuges 2 möglichst gleichmäßige Eigenschaften zu erzielen bzw. eine gezielte Abstufung in die verschiedenen Raumrichtungen zu erreichen, ist eine gewisse Verteilung der Faserstücke 6 in die verschiedenen Raumrichtungen notwendig. Die Ausrichtung wird einerseits durch die bereits in dem Wirrfaservlies vorhandene Verteilung bestimmt. Sie ist im Wesentlichen zweidimensional im Fall von Materialien, die in einem sog. wetlaced Prozess hergestellt wurden, und im Wesentlichen dreidimensional im Fall von Materialien, die in einem spunlaced Prozess hergestellt wurden. Auf die genannten Herstellungsverfahren wird hier nicht im Detail eingegangen, da sie dem einschlägig gebildeten Fachmann aus dem Stand der Technik bekannt sind.

Die Ausrichtung der Faserstücke 6 wird andererseits auch durch die beim Wickelprozess unter Spannung auftretende Orientierung der Fasern im Wesentlichen in Umfangsrichtung der Walze bestimmt. Das Ausmaß der Orientierung hängt insbesondere bei Materialien, die im spunlaced Prozess hergestellt wurden, primär von der Dimensionsstabilität des Wirrfaservlieses unter Spannung ab. Neben der Orientierung spielt auch die Dimensionsänderung des Wirrfaservlieses für den Wickelprozess selbst eine wesentliche Rolle, da eine konstante Breite und Dicke des Materials essentiell für einen präzisen Wickelprozess sind.

In Fig. 1 ist erkennbar, dass die Faserstücke 6 in alle Raumrichtungen orientiert sind, es jedoch vergleichsweise viele Faserstücke 6 sind, während in Fig. 2 die Orientierung der Faserstücke 6 im Wesentlichen der Wickelrichtung folgt, die Anzahl der Faserstücke 6 jedoch geringer ist.

Durch die Kombination von unterschiedlichen Faserdurchmessern bevorzugt im Bereich von 0,5 bis 5 dtex und der Verwendung von tendenziell feineren Fasern besonders bevorzugt im Bereich von 0,5 bis 2 dtex kann die Dimensionsstabilität des Wirrfaservlieses erhöht werden. Dadurch ist es möglich, um 50% bis 100% höhere Fasergehalte im Verbundwerkstoff zu erzielen, da der Wickelprozess mit um mind. 200% höherer Spannung durchgeführt werden kann, ohne eine ungleichmäßige Dimensionsänderung des Wirrfaservlieses beim Wickelvorgang oder eine unzulässig hohe Orientierung der Fasern beim Wickelprozess zu bewirken. Durch die höhere Spannung im Wickelprozess ergibt sich ein signifikant erhöhter Fasergehalt von 15 bis 25 Gewichts-% statt mit herkömmlichen Material erzielbaren 10 bis 15 Gewichts-%.

Solchermaßen hergestellte Bezüge können, wie Prüfstandsversuche nahelegen, eine um bis zu 20% höhere zulässige Linienlast beim Einsatz im Kalander und eine wesentlich höhere Schadensresistenz bei lokalen Überlastungen aufweisen.

Die Wickelverfahren, welche zur Herstellung derartiger Walzenbezüge 2 dienen können, sind per se im Wesentlichen bekannt, unterscheiden sich von den herkömmlichen Verfahren jedoch dadurch, dass sie, wie bereits weiter oben erwähnt, mit einer um bis zu 200% höheren Wickelspannung durchgeführt werden. Das bahnförmige Fasermaterial 5 wird gewöhnlich auf den rotierenden Walzenkörper 2 aufgewickelt und vor und/oder während und/oder nach dem Wickelprozess auf einen Walzenkörper mit dem Matrixmaterial 4 getränkt. Die Wicklung kann dabei über mehrere Hübe und in mehreren Lagen übereinander erfolgen, aber auch nur in einer Lage, wobei sich die einzelnen Wicklungen dachziegelartig überlappen können. Die Überlappungsbereiche können dabei 45% oder mehr von der Breite des bahnartigen Fasermaterials 5 betragen.

Üblicherweise befindet sich zwischen dem Walzenkern 2 und dem Walzenbezug 3 eine Haftschicht und/oder ein Baselayer, welche der Anbindung des Walzenbezuges 3 an den Walzenkern 2 dienen können. In den Figuren wurde aus Gründen der Übersichtlichkeit auf eine detaillierte Darstellung dieser haftvermittelnden Schichten verzichtet.

## Patentansprüche

1. Verwendung einer Walze (1) in einem Kalander einer Maschine zur Herstellung und/oder Veredelung einer Faserstoffbahn, wie einer Papier- oder Kartonbahn, wobei die Walze (1) einen Walzenkern (2) und einen darauf ausgebildeten Walzenbezug (3) umfasst, welcher zumindest eine Schicht aus einem Harzmaterial (4) mit zumindest einem darin eingebetteten, bandartigen Fasermaterial (5) aufweist, wobei die zumindest eine Schicht eine außenliegende Oberfläche aufweist, die geeignet ist mit der Faserstoffbahn direkt oder indirekt in Kontakt zu treten, wobei das zumindest eine bandartige Fasermaterial (5) Fasern mit einem Längengewicht von 0,5 bis 5 dtex, bevorzugt von 0,5 bis 2 dtex umfasst, wobei das bandartige Fasermaterial (5) in mehreren Hüben über mehrere Lagen oder in einem Hub über eine Lage mit einander überlappenden Wicklungen aufgewickelt ist.

2. Verwendung nach Anspruch 1, **dadurch gekennzeichnet, dass** der Gehalt an Fasermaterial (5) in der zumindest einen Schicht 15 bis 25 Gewichts-% beträgt.

3. Verwendung nach Anspruch 1 oder 2, **dadurch gekennzeichnet, dass** das zumindest eine Fasermaterial (5) ein Blend aus Fasern verschiedener Länge und/oder verschiedenen Längengewichts und/oder verschiedener Materialien ist.

4. Verwendung nach einem der Ansprüche 1 bis 3, **dadurch gekennzeichnet, dass** das zumindest eine Fasermaterial (5) ein Blend aus Fasern verschiedener Aramidtypen oder ein Blend aus Mischungen von Aramid mit Polyester, Polyacrylnitril oder Viskose ist.

5. Verwendung nach einem der Ansprüche 1 bis 4, **dadurch gekennzeichnet, dass** das zumindest eine Fasermaterial (5) in Form eines Wirrfaservlieses vorliegt.

6. Verwendung nach einem der vorstehenden Ansprüche, **dadurch gekennzeichnet, dass** der Walzenbezug zumindest einen Füllstoff enthält, welcher ausgewählt ist aus: Oxide, Carbide, Nitrate, (Aluminium)Silikate, Sulfate, Karbonate, Phosphate, Titanate, Carbonanotubes, Carbonanofibres, Glassspheren, Metalle mit oder ohne Oberflächenmodifikation mineralischen oder synthetischen Ursprungs.

## Claims

1. Use of a roller (1) in a calender of a machine for manufacturing and/or finishing a fibrous web, such as a paper web or cardboard web, wherein the roller (1) comprises a roller core (2) and, configured thereon, a roller covering (3) which displays at least one layer of a resin material (4) having at least one tape-type fiber material (5) embedded therein, wherein the at least one layer displays an outer surface which is suitable for coming into direct or indirect contact with the fibrous web, **wherein** the at least one tape-type fiber material (5) comprises fibers having a linear weight from 0.5 to 5 dtex, preferably from 0.5 to 2 dtex, wherein the tape-type fiber material (5) is wrapped in a plurality of strokes across a plurality of layers or in one stroke across one layer having mutually overlapping wrappings.

2. Use according to Claim 1, **characterized in that** the content of fiber material (5) in the at least one layer is 15 to 25% by weight.

3. Use according to Claim 1 or 2, **characterized in that** the at least one fiber material (5) is a blend of fibers of different lengths and/or of different linear weights and/or of different materials.

4. Use according to one of Claims 1 to 3, **characterized in that** the at least one fiber material (5) is a blend of fibers of various aramid types or a blend of mixtures of aramid and polyester, polyacrylonitrile or viscose.

5. Use according to one of Claims 1 to 4, **characterized in that** the at least one fiber material (5) is present in the form of a random-fiber non-woven material.

6. Use according to one of the preceding claims, **characterized in that** the roller covering contains at least one filler material which is selected from: oxides, carbides, nitrates, (aluminum) silicates, sulfates, carbonates, phosphates, titanates, carbon nano tubes, carbon nano fibers, glass spheres, metals with or without surface modification of mineral or synthetic origin.

## Revendications

1. Utilisation d'un rouleau (1) dans une calandre d'une machine pour la fabrication et/ou le traitement d'une bande de matière fibreuse, comme une bande de papier ou de carton, dans laquelle le rouleau (1) comprend un noyau de rouleau (2) et un recouvrement de rouleau (3) formé sur celui-ci, qui présente au moins une couche en un matériau de résine (4) avec au moins un matériau fibreux en forme de bande (5) noyé dans celui-ci, dans lequel ladite au moins une couche présente une surface externe, qui convient pour venir en contact directement ou indirectement avec la bande de matière fibreuse, dans lequel ledit au moins un matériau fibreux en forme de bande (5) comprend des fibres avec un poids par unité de longueur de 0,5 à 5 dtex, de préférence de 0,5 à 2 dtex, dans lequel le matériau fibreux en forme de bande (5) est enroulé en plusieurs courses sur plusieurs couches ou en une course sur une couche avec des spires se recouvrant mutuellement.

2. Utilisation selon la revendication 1, **caractérisée en ce que** la teneur en matériau fibreux (5) dans ladite au moins une couche vaut 15 à 25 % en poids.

3. Utilisation selon la revendication 1 ou 2, **caractérisée en ce que** ledit au moins un matériau fibreux (5) est une mixture de fibres de différentes longueurs et/ou de différents poids par unité de longueur et/ou de différents matériaux.

4. Utilisation selon l'une quelconque des revendications 1 à 3, **caractérisée en ce que** ledit au moins un matériau fibreux (5) est une mixture de fibres de différents types d'aramide ou une mixture de mélanges d'aramide avec du polyester, du polyacrylonitrile ou de la viscose.

5. Utilisation selon l'une quelconque des revendications 1 à 4, **caractérisée en ce que** ledit au moins un matériau fibreux (5) se présente sous la forme d'un non-tissé de fibres emmêlées.

6. Utilisation selon l'une quelconque des revendications précédentes, **caractérisée en ce que** le recouvrement de rouleau contient au moins une matière de charge, qui est choisie parmi: des oxydes, des carbures, des nitrates, des silicates (d'aluminium), des sulfates, des carbonates, des phosphates, des titanates, des nanotubes de carbone, des nanofibres de carbone, des billes de verre, des métaux avec ou sans modification de surface d'origine minérale ou synthétique.
